# EUROPEAN PATENT SPECIFICATION

(11) **EP 3 054 645 B1**
(45) Date of publication and mention of the grant of the patent: **04.10.2017**
(21) Application number: 15154092.9
(22) Date of filing: 06.02.2015
(51) Int. Cl.: H04L 29/06

(54) **APPARATUSES, SYSTEM, METHODS AND COMPUTER PROGRAMS SUITABLE FOR TRANSMITTING OR RECEIVING ENCRYPTED OUTPUT DATA PACKETS IN AN OPTICAL DATA TRANSMISSION NETWORK**
VORRICHTUNG, SYSTEM, VERFAHREN UND COMPUTERPROGRAMME ZUM SENDEN ODER EMPFANGEN VON VERSCHLÜSSELTEN AUSGABEDATENPAKETEN IN EINEM OPTISCHEN DATENÜBERTRAGUNGSNETZ
APPAREILS, SYSTÈME, PROCÉDÉS ET PROGRAMMES INFORMATIQUES APPROPRIÉS POUR TRANSMETTRE OU RECEVOIR DES PAQUETS DE DONNÉES DE SORTIE CHIFFRÉES DANS UN RÉSEAU DE TRANSMISSION OPTIQUE DE DONNÉES

(43) Date of publication of application: 10.08.2016
(73) Proprietor: Alcatel Lucent, 92100 Boulogne-Billancourt (FR)
(72) Inventor: Giouroukos, Pantelis, 90411 Nürnberg (DE)
(74) Representative: Wetzel, Emmanuelle

(56) References cited:
- US-A1- 2008 270 785
- US-A1- 2015 026 459

## Description

### Technical Field

Embodiments relate to apparatuses, a system, methods and computer programs suitable for transmitting encrypted output data packets and/or receiving encrypted input data packets in an optical data transmission network, more particularly, but not exclusively, on using operator-specific control information to transmit information related to encryption instructions.

### Background

This section introduces aspects that may be helpful in facilitating a better understanding of the invention(s). Accordingly, the statements of this section are to be read in this light and are not to be understood as admissions about what is in the prior art or what is not in the prior art.

Demands for encryption on wired and wireless connections are steadily increasing. Especially optical networks, which may be used to transmit huge amounts of data of a multitude of users, may present an enticing target for potential eavesdroppers. Encrypting the optical data transmission on a low level, e.g. using hardware encryption and decryption, may result in an improved privacy and security against wiretapping and man-in-the-middle or injection attacks.

The International Telegraph Union Telecommunication Standardization Sector (ITU-T) standard G.709 describes Interfaces for the Optical Transport Network (OTN) for transmitting data over an optical network. G.709 systems may use Dense Wavelength Division Multiplexing (DWDM) to achieve a high throughput. G.709 may use Optical channel Transport Units (OTUk, where k denotes a data rate indicator) to transport client signals, e.g. Internet Protocol (IP), Ethernet, Fibre Channel and OTN Optical channel Data Units (ODUk). Within ODUk, payload is mapped to an Optical channel Payload Unit (OPUk).

The Diffie-Hellman key exchange (DH) is a method for securely exchanging cryptographic keys over a public channel. With DH, two parties may, without prior knowledge of each other, establish a symmetrically encrypted connection based on a shared secret key, which is based on public keys of the two parties. Some variants of the Diffie-Hellman key exchange, such as Ephemeral Diffie-Hellman (EDH or DHE) may provide additional security by using temporary public keys, which may provide Perfect Forward Secrecy (PFS).

More information can be found in:
Recommendation (2002). G.709. Interfaces for the optical transport network (OTN). ITU Telecommunication Standardization Sector.
Giouroukos, P., Hofmann, S., & Tretter, T. (2012). Rapid Development of Software Components for the Secure Communication of Highly Reliable Optical Cross-Connect Systems. ITG-Fachbericht-Photonische Netze.
Giouroukos, P., & Tretter, T (2012). Protocol modeling & engineering system, European Patent Office. EP 2 640 018 A1. Filing date: 13.03.2012.
C. Kaufman, P. Hoffman, Y. Nir, P. Eronen (September 2010). RFC 5996 Internet Key Exchange(IKEv2) Protocol. Internet Engineering Task Force (IETF).
Loprieno, G, et al., US 2008/270785 A1: Security Approach for Transport Equipment.
Divakar, P et al., US 2015/0026459 A1: Method and System for Encrypting Multimedia Streams.

### Summary of illustrative Embodiments

Some simplifications may be made in the following summary, which is intended to highlight and introduce some aspects of the various exemplary embodiments, but such simplifications are not intended to limit the scope of the invention(s). Detailed descriptions of a preferred exemplary embodiment adequate to allow those of ordinary skill in the art to make and use the inventive concepts will follow in later sections.

Various embodiments provide apparatuses, a system, methods and computer programs suitable for transmitting encrypted output data packets and/or receiving encrypted input data packets in an optical data transmission network. Establishing an encrypted connection over an optical network may require either a centralized solution, e.g. using a central key server, Pre-Shared Key (PSK) or a Public Key Infrastructure (PKI), or the two may have to establish an encryption key, e.g. using a Diffie-Hellman key exchange. To initiate the key exchange, embodiments may use operator-specific bytes in the header of data packets on the optical data transmission network to transmit the encryption instructions. Such in-band messaging may help establish the encrypted connection without the use of additional communication channels, such as e.g. General Communication Channels (GCC), and may enable key frame-accurate changes of the encryption keys.

Embodiments provide an apparatus suitable for transmitting encrypted output data packets in an optical data transmission network. The apparatus comprises one or more interfaces to obtain input data packets and to provide the encrypted output data packets. The apparatus further comprises a control module to determine the encrypted output data packets, based on the input data packets and information related to an encryption. The encrypted output data packets comprise information related to control information and information related to payload information. The information related to the control information comprises information related to operator-specific control information. The information related to the operator-specific control information comprises information related to encryption instructions based on the information related to the encryption. Using the information related to operator-specific control information for transmitting the information related to the encryption instructions may enable in-band transmission of the information related to the encryption instructions, be transparent to Non-Intrusive Monitoring (NIM) and may prevent the information related to the encryption instructions from being altered during the transport over network elements of a different provider, as may be the case when using reserved bytes for transmission.

In at least some embodiments, the optical data transmission network may correspond to a G.709 optical data transmission network. The information related to the control information may correspond to a G.709 Optical channel Data Unit-header, ODU. The information related to the operator-specific control information may correspond to operator-specific bytes of a Trail Trace Identifier, TTI, of bytes reserved for Path Monitoring, PM. Alternatively, the information related to the operator-specific control information may correspond to operator-specific bytes of a Trail Trace Identifier, of bytes reserved for Tandem Connection Monitoring, TCM. Using the operator-specific bytes of a Trail Trace Identifier, TTI for transmitting the information related to the encryption instructions may enable in-band transmission of the information related to the encryption instructions, be transparent to Non-Intrusive Monitoring (NIM) and may prevent the information related to the encryption instructions from being altered during the transport over network elements of a different provider, as may be the case when using reserved bytes for transmission.

In at least some embodiments, the information related to encryption instructions may comprise information related to encryption control information and information related to encryption payload information. Establishing a fixed data format comprising a control and a payload section may enable efficient processing in hardware.

In at least some embodiments, the control module may be configured to provide an encryption key based on the information related to the encryption. The information related to the encryption payload information may comprise information related to the encryption key. Providing, e.g. generating, the encryption key based on the information related to the encryption, which may contain an encryption algorithm, seed, information related to a current encryption etc., may enable the control module to provide the encrypted output data packets with an encrypted payload and may enable the transmission of a public key for an establishment of a shared transmission key.

In at least some embodiments, the information related to the encryption control information may comprise information related to a frame counter. The information related to the encryption payload information may comprise information related to an encryption key. The information related to the encryption key may extend across at least two subsequent output data packets. In various embodiments, the information related to the encryption control information may comprise information related to a key change mechanism. Extending the information related to the encryption payload information across multiple packets, using a frame counter, may enable the transmission of encryption information, e.g. encryption keys, larger than the size of the information related to the operator-specific control information.

In at least some embodiments, the control module may be configured to determine a new encryption key and information related to a key change delay. The control module may be configured to update the information related to the encryption based on the new encryption key and based on the information related to the key change delay, such that output data packets are determined with continuously encrypted payload information. The information related to the encryption payload information may comprise information related to the new encryption key. The information related to the key change mechanism may comprise information related to the key change delay. Using an in-band transmission of the information related to the new encryption key and the information related to the key change delay may enable a frame-precise switch of the encryption/decryption keys, such that no traffic hit might occur.

Embodiments further provide an apparatus suitable for receiving encrypted input data packets in an optical data transmission network. The apparatus comprises one or more interfaces to obtain the encrypted input data packets and to provide output data packets. The apparatus further comprises a control module to determine the output data packets based on the encrypted input data packets and based on information related to an encryption. The encrypted input data packets comprise information related to control information and information related to payload information. The information related to the control information comprises information related to operator-specific control information. The information related to the operator-specific control information comprises information related to encryption instructions. Using the information related to operator-specific control information for transmitting the information related to the encryption instructions may enable in-band transmission of the information related to the encryption instructions, be transparent to Non-Intrusive Monitoring (NIM) and may prevent the information related to the encryption instructions from being altered during the transport over network elements of a different provider, as may be the case when using reserved bytes for transmission.

In at least some embodiments, the optical data transmission network may correspond to a G.709 optical data transmission network. The information related to the control information may correspond to a G.709 Optical channel Data Unit-header, ODU. The information related to the operator-specific control information may correspond to operator-specific bytes of a Trail Trace Identifier, TTI, of bytes reserved for Path Monitoring, PM. Alternatively, the information related to the operator-specific control information may correspond to operator-specific bytes of a Trail Trace Identifier, of bytes reserved for Tandem Connection Monitoring, TCM. Using the operator-specific bytes of a Trail Trace Identifier, TTI, for transmitting the information related to the encryption instructions may enable in-band transmission of the information related to the encryption instructions, be transparent to Non-Intrusive Monitoring (NIM) and may prevent the information related to the encryption instructions from being altered during the transport over network elements of a different provider, as may be the case when using reserved bytes for transmission.

In at least some embodiments, the information related to the encryption instructions may comprise information related to encryption control information and information related to encryption payload information. Establishing a fixed data format comprising a control and a payload section may enable efficient processing in hardware.

In at least some embodiments, the information related to the encryption payload information may comprise information related to an encryption key. The control module may be configured to determine and/or update the information related to the encryption based on the information related to the encryption key. The information related to the encryption key may be used to construct a shared key, e.g. a shared key as used in the Diffie-Hellman key exchange, which may be used to decrypt the payload of the packets.

In at least some embodiments, the information related to the encryption control information may comprise information related to a key change mechanism and information related to a key change delay. The information related to the encryption payload information may comprise information related to a new encryption key. The control module may be configured to update the information related to the encryption based on the information related to the new encryption key and the information related to the key change delay. The information related to the encryption key may be used to construct a shared key, e.g. a shared key as used in the Diffie-Hellman key exchange, which may be used to decrypt the payload of the packets. Using an in-band transmission of the information related to the new encryption key and the information related to the key change delay may enable a frame-precise switch of the encryption/decryption keys, such that no traffic hit might occur.

Embodiments further provide a system comprising a transmitter apparatus suitable for transmitting encrypted output data packets in an optical data transmission network and a receiver apparatus suitable for receiving encrypted input data packets in the optical data transmission network. The transmitter apparatus is configured to transmit the encrypted output data packets to the receiver apparatus via at least one network component. Embodiments may provide an encrypted communication between the transmitter apparatus and the receiver apparatus, which may provide an in-band encryption key exchange and gap-less key exchange, and which may work across an optical data transmission network of a second provider.

Embodiments further provide a method suitable for transmitting encrypted output data packets in an optical data transmission network. The method comprises obtaining input data packets and providing the encrypted output data packets. The method further comprises determining the encrypted output data packets based on the input data packets and information related to an encryption. The encrypted output data packets comprise information related to control information and information related to payload information. The information related to the control information comprises information related to operator-specific control information. The information related to the operator-specific control information comprises information related to encryption instructions, based on the information related to the encryption.

Embodiments further provide a method suitable for receiving encrypted input data packets in an optical data transmission network. The method comprises obtaining the encrypted input data packets and providing output data packets. The method further comprises determining the output data packets based on the encrypted input data packets and based on information related to an encryption. The encrypted input data packets comprise information related to control information and information related to payload information. The information related to the control information comprises information related to operator-specific control information. The information related to the operator-specific control information comprises information related to encryption instructions.

Embodiments further provide a computer program having a program code for performing at least one of the above methods, when the computer program is executed on a computer, a processor, or a programmable hardware component. A further embodiment is a computer readable storage medium storing instructions which, when executed by a computer, processor, or programmable hardware component, cause the computer to implement one of the methods described herein.

### Brief description of the figures

Some other features or aspects will be described using the following non-limiting embodiments of apparatuses or methods or computer programs or computer program products by way of example only, and with reference to the accompanying figures, in which:
- Fig. 1: illustrates a block diagram of an embodiment of an apparatus suitable for transmitting encrypted output data packets in an optical data transmission network;
- Fig. 2: illustrates a block diagram of an embodiment of a receiver apparatus and a transmitter apparatus in an optical data transmission network.
- Fig. 3: illustrates a block diagram of an embodiment of an apparatus suitable for receiving encrypted input data packets in an optical data transmission network;
- Fig. 4: illustrates a block diagram of an embodiment of a system comprising a transmitter apparatus and a receiver apparatus;
- Fig. 5: illustrates a UML-like diagram of an embodiment of data structures in a protocol;
- Fig. 6: illustrates a state diagram of an embodiment of a protocol;
- Fig. 7a-7e: illustrate a UML-like diagram of an embodiment of a protocol;
- Fig. 8: illustrates a state diagram of an embodiment of a protocol;
- Fig. 9: shows a flow chart of an embodiment of a method suitable for transmitting encrypted output data packets in an optical data transmission network; and
- Fig. 10: shows a flow chart of an embodiment of a method suitable for receiving encrypted input data packets in an optical data transmission network.

### Description of Embodiments

Various example embodiments will now be described more fully with reference to the accompanying drawings in which some example embodiments are illustrated. In the figures, the thicknesses of lines, layers or regions may be exaggerated for clarity. Optional components are illustrated using broken, dashed or dotted lines.

Accordingly, while example embodiments are capable of various modifications and alternative forms, embodiments thereof are shown by way of example in the figures and will herein be described in detail. It should be understood, however, that there is no intent to limit example embodiments to the particular forms disclosed, but on the contrary, example embodiments are to cover all modifications, equivalents, and alternatives falling within the scope of the invention. Like numbers refer to like or similar elements throughout the description of the figures.

As used herein, the term, "or" refers to a non-exclusive or, unless otherwise indicated (e.g., "or else" or "or in the alternative"). Furthermore, as used herein, words used to describe a relationship between elements should be broadly construed to include a direct relationship or the presence of intervening elements unless otherwise indicated. For example, when an element is referred to as being "connected" or "coupled" to another element, the element may be directly connected or coupled to the other element or intervening elements may be present. In contrast, when an element is referred to as being "directly connected" or "directly coupled" to another element, there are no intervening elements present. Similarly, words such as "between", "adjacent", and the like should be interpreted in a like fashion.

The terminology used herein is for the purpose of describing particular embodiments only and is not intended to be limiting of example embodiments. As used herein, the singular forms "a," "an" and "the" are intended to include the plural forms as well, unless the context clearly indicates otherwise. It will be further understood that the terms "comprises," "comprising," "includes" or "including," when used herein, specify the presence of stated features, integers, steps, operations, elements or components, but do not preclude the presence or addition of one or more other features, integers, steps, operations, elements, components or groups thereof. Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

Secure optical layer is not in focus when interconnecting data centers unlike reliability, resilience and delay. The optical network may be seen as "dumb wire". Additionally high data rates and the difficulty to gain physical access to a particular fiber may lead to the assumption that the optical transport network is secure. Security sensible customers may use encryption at the edge router towards/from the optical network. This may work on layer 3 and above and add to the cost of the additional equipment and the administrative and configuration effort.

Operators may try to introduce security measures into the transport network. In embodiments, operators may take into service optical line interfaces which may support encryption so that the aggregated traffic travels encrypted through the optical network. Such solutions may usually work with centralized key servers within the operator's domain. Every time a service is set up a new key request may be sent to the central key server by the encrypting nodes. Taking into account that in today's networks services may be dynamically setup and torn down by Software Defined Networks (SDN) and the corresponding Generalized Multi-Protocol Label Switching (GMPLS) control plane, the key server may become the bottleneck. Working with pre-shared keys may have disadvantages with respect to security.

Things may get complicated when the path crosses operator's boundaries. In principle standard compliant interworking solutions may be in place, but security might not be the main focus. There may be a requirement to enable end-to-end encryption that works over operator boundaries and performs well enough to be used in SDN scenarios.

Embodiments may provide
▪ Synchronization of encryption parameters like used encryption algorithm, encryption keys or initialization vectors.
▪ Possibility to change encryption keys without impacting the data stream (i.e. no traffic hit). ▪ End-to-End communication channel.
▪ Seamless integration into existing network topologies.
▪ G.709 standard compliant solution

Previous approaches may use a General Communication Channel (GCC) between the end points and run appropriate key exchange protocols like the Internet-Key-Exchange-Protocol, version 2 (IKEv2). However such an approach might not provide a possibility to synchronously change encryption keys at the encryption device to avoid a traffic hit. Additional major drawbacks of such approach may include:
▪ Lack of resources. Typically a network element may have limited GCC termination capacity which is may be used for network communications.
▪ Usually network providers may hesitate to enable GCC channels towards customers or other network providers because of security considerations.
▪ Running a full IP stack may considered wasteful when there is a need only to exchange a limited amount of data.

In embodiments, one approach to avoid these drawbacks may be to use other bytes of the overhead. Using the ODU overhead may be preferred since it is terminated at the edge node and may be transported transparently within the optical backbone. At least some embodiments may use the Operator Specific part of the ODU Trail Trace Identifier as defined by G.709 for message exchange. The approach of using other reserved bytes, which may be possible may be discarded due to the risk of interworking issues, as the reserved bytes may be used by other header fields in future protocol iterations

At least some embodiments may provide a standard compliant solution to overcome this issue. Embodiments may define a protocol running between the edge nodes of the optical network capable to support various key distribution mechanisms (e.g. Diffie-Hellman, PKI) in order to exchange a session key used to encrypt and authenticate the communication between the involved edge nodes, which may be a precondition to exchange the keys needed by the ODU encryption engine to encrypt the data stream on the ODU layer. Embodiments may further support re-keying, periodically or on request. Embodiments may provide support for a hitless key exchange mechanism of the ODU encryption engine. Traffic interruption caused by protection switch or service preemption may be considered by the protocol and adequate measures may be implemented.

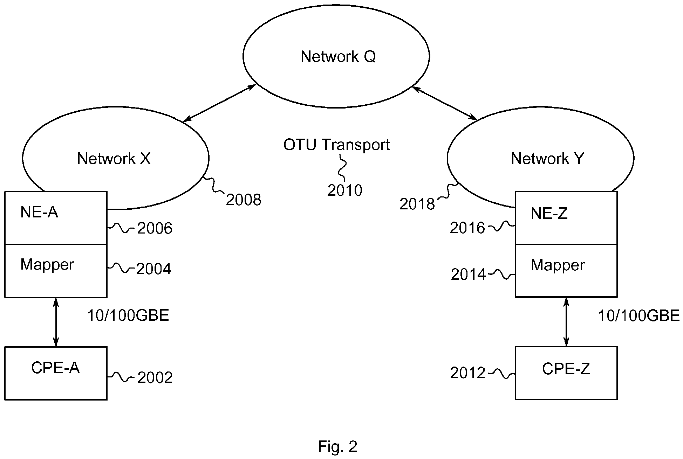

At least some embodiments may use a de-centralized approach. This might be achieved using key exchange mechanisms on the local endpoints. In an optical network scenario, as shown in Fig. 2, a Network Element (NE) NE-A 2006 may map a 1/10/100 Gigabit Ethernet (GBE) connection between the Mapper 2004, which may be comprised in or coupled to the Network Element NE-A, and a Customer Premise Equipment (CPE)-A into an Optical channel Data Unit (ODU) 0/2/4 signal. The ODU may be mapped into an Optical channel Transport Unit (OTU) and may travel from Network-X 2008 via Network-Q 2010 to Network-Y 2018 and may be de-mapped into a GBE signal between the Mapper 2014 and a CPE-Z 2012 back again. Any encryption done on the GBE may usually be done either on the GBE layer (at customer site). A network operator may transport the signal transparently. There may be approaches to allow network operators to additionally encrypt the OTU, but they may raise interworking issues and may offer encryption only between adjacent network nodes.

This approach may enable an operator to offer encryption services on ODU layer, which may have the advantage that the ODU may be transported transparently through any involved networks on the path. Stream encryption on the ODU layer may be performed on a framer, e.g. AES, and may also comprise authentication mechanisms.

At least some embodiments may be explained on an exemplary Diffie-Hellman (DH) key exchange algorithm. However, at least some embodiments may also support Pre-Shared Key (PSK) or Public Key Infrastructure (PKI).

When the Mapper 2004, which may correspond to the apparatus 10 as introduced subsequently, boots, it may generate a set of public/private keys and store them into secure memory. When a connection is established the signal may get alarm free (the Open Connection Indication (OCI) may clear - which is an indication that the new service is set up) and a valid signal may be transported from Mapper-A 2004 to Mapper-Z 2014, which may correspond to the apparatus 20 as introduced subsequently. In at least some embodiments, this may be used as trigger to start the DH. The information might be transported in-band from A to Z using the Operator-Specific bytes of the ODU TTI on the PM layer as defined by G.709. This may have the advantage that any NE in between might not touch these bytes (however Non-Intrusive-Monitoring may be supported). At the end of the process both Mapper Pack A 2004 and Mapper Pack Z 2014 may share the same secret (key). This secret might be used to derive the encryption key which may be used to encrypt the communications between Mapper-A 2004 and Mapper-Z 2014 (on the management plane). The protocol may also support re-keying on the management plane, but this may depend on the chosen key exchange algorithm. Any needed message exchange to complete this task might be done using the key exchange messages.

In at least some embodiments, the common secret used to encrypt the symmetric session key may be selected by each device and sent to the end of the ODU trail. So, Mapper-A 2004 may select a random Key (which may be used to encrypt the traffic from A to Z) and send it to Z 2014 (encrypted using the shared secret key). At the other end, Mapper Z 2014 may choose also a random key and send it (encrypted) to Mapper A 2004 so that Mapper Z 2014 can decrypt the flow which is coming from A. At the end both Mapper packs may have the same master key, and two session keys (one for each flow A->Z and Z->A).

Additionally each Mapper may inform the other about the time after a re-keying is required (T). Since both streams may use different encryption keys the time might be different. Also each Mapper may inform the other on the number of frames it may need for a key change, which may be higher than the detection rate. Optionally, this information might be periodically resent. The status information may be exchanged periodically to allow changing encryption keys after they expire. In case of data plane alarms, no rekeying mechanism may be required, because it may be assumed that the path is still valid and a protection switch on the control plane may restore it.

In the following some embodiments of apparatuses, a system, methods and computer programs suitable for transmitting encrypted output data packets and/or suitable for receiving encrypted input data packets in an optical data transmission network, more particularly, but not exclusively, on using operator-specific control information to transmit information related to encryption instructions will be described.

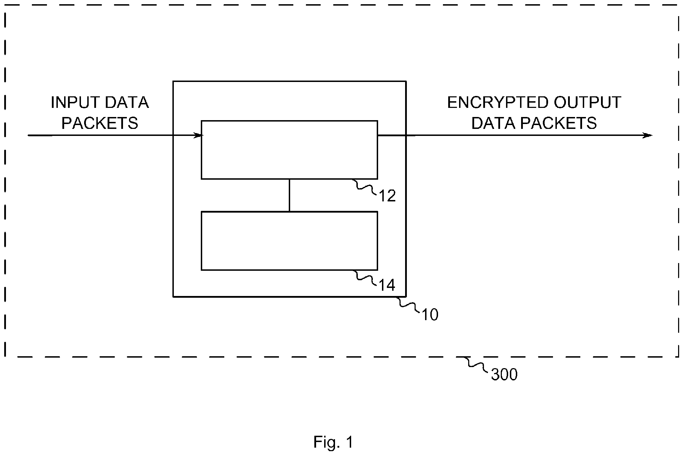

Fig. 1 illustrates a block diagram of an apparatus 10 suitable for transmitting encrypted output data packets in an optical data transmission network 300, the apparatus 10 comprising one or more interfaces 12 and a control module 14. The one or more interfaces 12 are coupled to the control module 14.

In embodiments, the optical data transmission network may correspond to any network transmitting information by sending pulses of light through an optical fiber or other medium. In at least some embodiments, the optical data transmission network may correspond to a G.709 optical data transmission network.

The apparatus 10 comprises the one or more interfaces 12 to obtain input data packets and to provide the encrypted output data packets. The one or more interfaces 12 may correspond to an input and/or output for receiving and/or transmitting information, which may be in digital (bit) values according to a specified code, within a module, between modules or between modules of different entities.

The apparatus 10 further comprises the control module 14 to determine the encrypted output data packets, based on the input data packets and information related to an encryption.

In at least some embodiments, the control module 14 may be configured do determine the encrypted output data packets based on a stream cipher based on the information related to the encryption.

In embodiments the control module 14 may be implemented using one or more processing units, one or more processing devices, any means for processing, such as a processor, a computer or a programmable hardware component being operable with accordingly adapted software. In other words, the described functions of the control module 14 may as well be implemented in software, which is then executed on one or more programmable hardware components. Such hardware components may comprise a general purpose processor, a Digital Signal Processor (DSP), a micro-controller, etc. In at least some embodiments, the control module 14 may be configured to encrypt the input data packets for the encrypted output data packets.

In at least some embodiments, the information related to the encryption may comprise at least one element of the group of an information related to a public encryption key, information related to a private encryption key, information related to a shared encryption key, information related to one or more public encryption key of one or more communication partners, information related to a supported encryption protocol, and information related to an encryption parameter.

The encrypted output data packets comprise information related to control information and information related to payload information. The information related to the control information comprises information related to operator-specific control information. The information related to the operator-specific control information comprises information related to encryption instructions based on the information related to the encryption.

In at least some embodiments, the information related to the control information may correspond to a G.709 Optical channel Data Unit-header, ODU. The information related to the operator-specific control information may correspond to operator-specific bytes of a Trail Trace Identifier, TTI, of bytes reserved for Path Monitoring, PM. Alternatively, the information related to the operator-specific control information may correspond to operator-specific bytes of a Trail Trace Identifier, of bytes reserved for Tandem Connection Monitoring, TCM. In at least some other embodiments, the information related to the operator-specific control information may correspond to operator-specific bytes of other header information, e.g. in the G.709 ODU-header.

In at least some embodiments, the information related to encryption instructions may comprise information related to encryption control information and information related to encryption payload information. In at least some embodiments, the information related to the encryption control information may comprise at least one element of the group of information related to an encryption standard, information related to an encryption parameter, information related to a key change delay, information related to a frame counter, information related to a encryption key identifier, information related to an acknowledgement, and information related to a sequence number. In at least some embodiments, the information related to the encryption payload information may comprise information related to an encryption key and/or information related to a certificate.

In at least some embodiments, the information related to the operator-specific control information may comprise of 32 bytes which can be used by the operator. The source of the ODU, e.g. the transmitter apparatus 10, may generate the byte sequence, might not be touched during transit, but only by the endpoints of an encrypted stream. Non-Intrusive Monitoring (NIM) functionality may be supported. The sink of the ODU, e.g. a receiver apparatus 20, may terminate the signal and extract the bytes.

In at least some embodiments, the information related to the encryption control information may comprise information related to a frame counter. The information related to the encryption payload information may comprise information related to an encryption key. The information related to the encryption key may extend across at least two subsequent output data packets.

To support larger than 32 byte messages a frame counter may be used. The current parameters may be exchanged periodically, so that both peers may have consistent states. In an implementation, the first bit might determine the operational type (normal or key exchange). In case of a key exchange, the next 7 bits may represent the information related to the frame counter. This may be used to transport more than 32 bytes (31*128 bytes might be used to transport information related to an encryption keys (e.g. using the DH algorithm), certificates (PKI) or initiate a key exchange on the control layer.

In at least some embodiments, the control module 14 may be configured to provide an encryption key based on the information related to the encryption. The information related to the encryption payload information may comprise information related to the encryption key. In at least some embodiments, the control module 14 may be configured to generate the encryption key, based on the information related to the encryption. In at least some other embodiments, the control module may obtain the encryption key from an optional encryption module, from a digital signal processor providing encryption functionality, from a microprocessor, from one or more encryption units, from one or more encryption devices, from any means for encrypting, etc., based on the information related to the encryption.

In normal operation the frame counter might be ignored since many messages may fit into 31 bytes. The actual used information related to the encryption, e.g. the AES encryption keys, might not fit into a single message. The information related to the encryption may be split into two messages (each of them might transports half of the information related to the encryption key).

In at least some embodiments, an encryption key may correspond to at least one element of the group of a private encryption key, a public encryption key, a master encryption key, a composite encryption key, an asymmetric encryption key, and a symmetric encryption key. In at least some embodiments, the encryption key may be based on Advanced Encryption Standard (AES), Blowfish, Secure Hash Algorithm, Rivest Cipher etc.

In at least some embodiments, the information related to the encryption control information may comprise information related to a key change mechanism.

In at least some embodiments, the control module 14 may be configured to determine a new encryption key and information related to a key change delay. The control module 14 may be configured to update the information related to the encryption based on the new encryption key and based on the information related to the key change delay, such that output data packets are determined with continuously encrypted payload information. The information related to the encryption payload information may comprise information related to the new encryption key. The information related to the key change mechanism may comprise information related to the key change delay.

In at least some embodiments, the information related to the key change delay may comprise information related to a number of frames to wait before changing the encryption keys and/or information related to a frame identifier, from which on a new encryption might be used. In at least some embodiments, the control module 14 may determine the key change delay, based on the time needed to update the information related to the encryption and/or the number of frames needed to transmit the encryption keys.

In at least some embodiments, the encryption keys might be changed and the information related to the encryption might be updated after a period of time. In at least some embodiments, changing the encryption key might not lead to a traffic interruption. A first end point, e.g. the apparatus 10, which wants to change the encryption key (e.g. because it is expired) may inform the peer, a second end point, e.g. an apparatus 20 as described subsequently, about the new key. The second end point might acknowledge the reception of the encryption key, which may indicate that the key might be changed. To avoid traffic hits the first end point of the signal might inform that it is going to use the new key after n frames by sending a message to the second end point.

When the rekeying message is received by the second end point, it might start counting received frames and might switch the key after n frames (which may be already known to the encryption engine). When this is done successfully the second end point may inform the first end point that the new key is now valid.

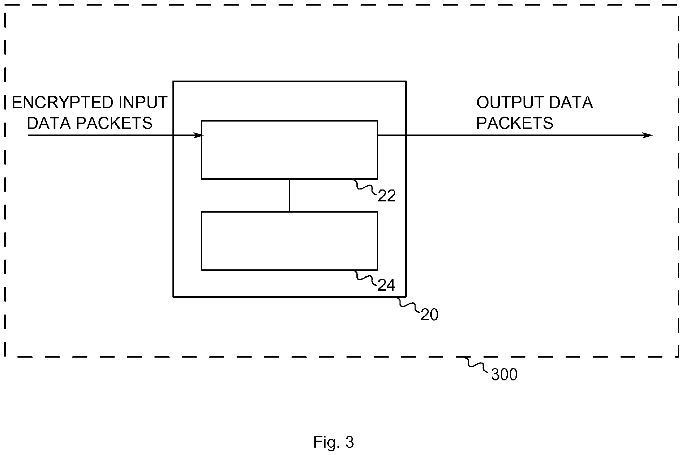

Fig. 3 illustrates a block diagram of an embodiment of an apparatus 20 suitable for receiving encrypted input data packets in an optical data transmission network 300. The apparatus 20 comprises one or more interfaces 22 to obtain the encrypted input data packets and to provide output data packets. The one or more interfaces 22 may correspond to an input and/or output for receiving and/or transmitting information, which may be in digital (bit) values according to a specified code, within a module, between modules or between modules of different entities.

The apparatus 20 further comprises a control module 24 to determine the output data packets based on the encrypted input data packets and based on information related to an encryption. The encrypted input data packets comprise information related to control information and information related to payload information. The information related to the control information comprises information related to operator-specific control information. The information related to the operator-specific control information comprises information related to encryption instructions. The one or more interfaces 22 are coupled to the control module 24.

In embodiments the control module 24 may be implemented using one or more processing units, one or more processing devices, any means for processing, such as a processor, a computer or a programmable hardware component being operable with accordingly adapted software. In other words, the described functions of the control module 24 may as well be implemented in software, which is then executed on one or more programmable hardware components. Such hardware components may comprise a general purpose processor, a Digital Signal Processor (DSP), a micro-controller, etc. In at least some embodiments, the control module 24 may be configured to decrypt the encrypted input data packets for the output data packets.

In at least some embodiments, the optical data transmission network may correspond to a G.709 optical data transmission network. The information related to the control information may correspond to a G.709 Optical channel Data Unit-header, ODU. The information related to the operator-specific control information may correspond to operator-specific bytes of a Trail Trace Identifier, TTI, of bytes reserved for Path Monitoring, PM. Alternatively, the information related to the operator-specific control information may correspond to operator-specific bytes of a Trail Trace Identifier, of bytes reserved for Tandem Connection Monitoring, TCM. In at least some other embodiments, the information related to the operator-specific control information may correspond to operator-specific bytes of other header information, e.g. of other protocols.

In various embodiments, the information related to the encryption instructions may comprise information related to encryption control information and information related to encryption payload information.

In at least some embodiments, the information related to the encryption payload information may comprise information related to an encryption key. The control module 24 may be configured to determine and/or update the information related to the encryption based on the information related to the encryption key.

In at least some embodiments, the control module 24 may be configured to generate a new master key, based on the information related to the encryption key and the information related to the encryption. The control module 24 may be further configured to change the encryption/decryption key for decrypting the encrypted input packets, based on the new master key.

In at least some embodiments, the information related to the encryption control information may comprise information related to a key change mechanism and information related to a key change delay. The information related to the encryption payload information may comprise information related to a new encryption key. The control module 24 may be configured to update the information related to the encryption based on the information related to the new encryption key and the information related to the key change delay. In at least some embodiments, the control module 24 may be configured to change the encryption key for decrypting the encrypted input packets, based on a number of frames based on the information related to the key change delay.

In at least some embodiments, the encryption keys might be changed and the information related to the encryption might be updated after a period of time. In at least some embodiments, changing the encryption key might not lead to a traffic interruption. A first end point, which wants to change the encryption key (e.g. because it is expired) may inform the peer, a second end point, e.g. the apparatus 20, about the new key. The second end point might acknowledge the reception of the encryption key, which may indicated that the key might be changed. To avoid traffic hits the first end point of the signal might inform that it is going to use the new key after n frames by sending a message to the second end point.

More details and aspects of the apparatus 20 (e.g. the optical data transmission network 300, the information related to the encryption, the information related to the control information, the information related to the payload information, the information related to the operator-specific control information, the information related to the encryption instructions, the information related to the encryption control information, the information related to the encryption payload information, the information related to the encryption key, the information related to the key change mechanism, the information related to the key change delay) are mentioned in connection with the proposed concept or one or more examples described above (e.g. Fig. 1 to 2). The apparatus 20 may comprise one or more additional optional features corresponding to one or more aspects of the proposed concept or one or more examples described above or below.

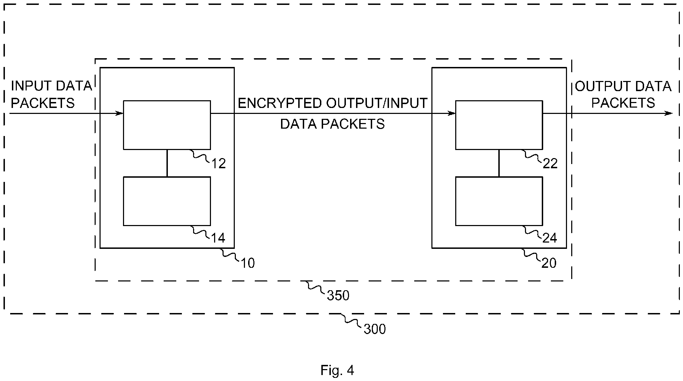

Fig. 4 illustrates a block diagram of an embodiment of a system 350 comprising a transmitter apparatus 10 suitable for transmitting encrypted output data packets in an optical data transmission network 300 and a receiver apparatus 20 suitable for receiving encrypted input data packets in the optical data transmission network 300, wherein the transmitter apparatus 10 is configured to transmit the encrypted output data packets to the receiver apparatus 20 via at least one network component. The at least one network component may be comprised in the optical data transmission network 300.

In at least some embodiments, the at least one network component may comprise at least one element of the group of one or more electrical-optical converters, one or more optical-electrical converters, one or more optical fibers, one or more switches, one or more interconnects, and one or more repeaters. In at least some embodiments, the transmitter apparatus 10 and the receiver apparatus 20 may be operated by a first operator, and at least one network component between the transmitter apparatus 10 and the receiver apparatus 20 may be operated by a second operator.

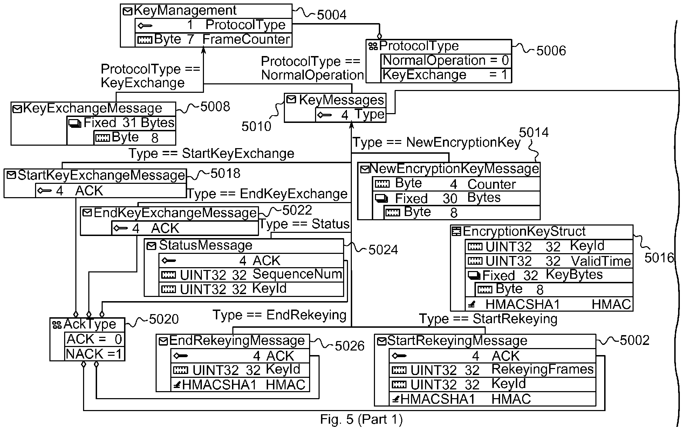

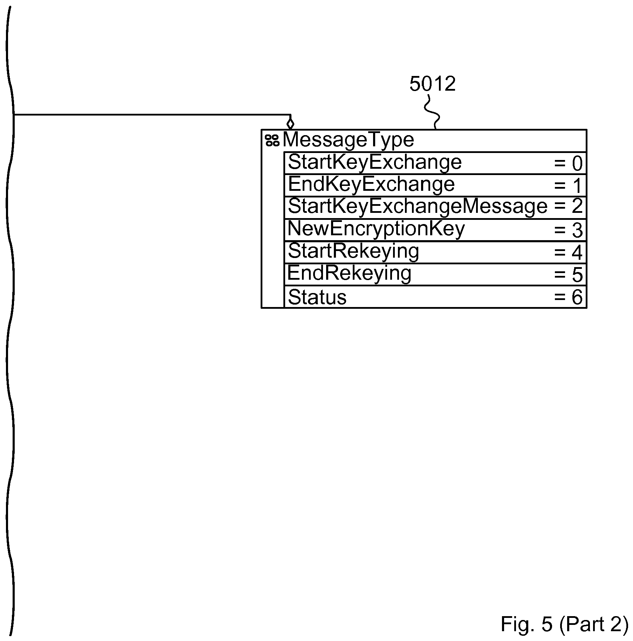

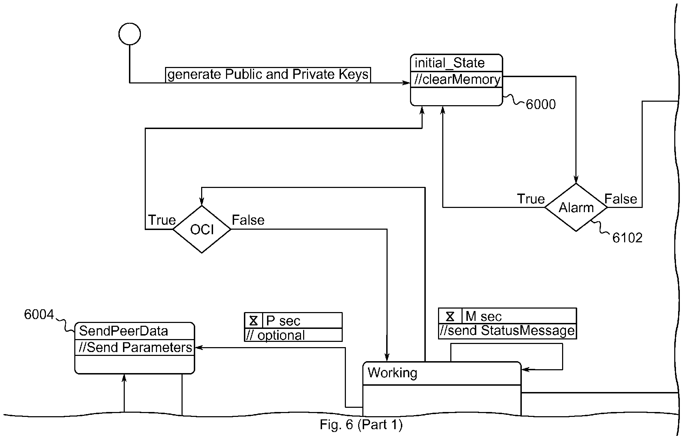

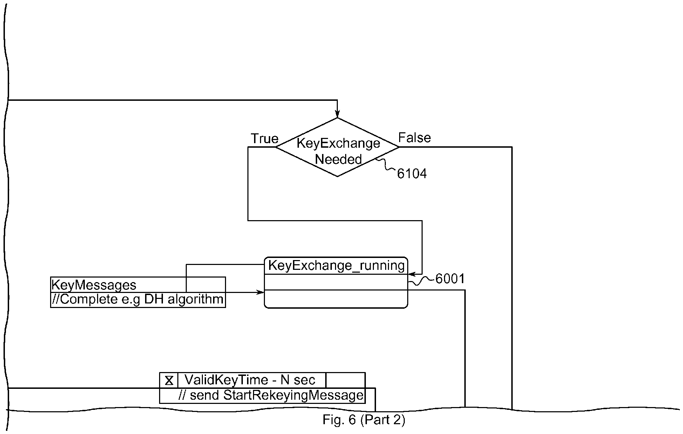

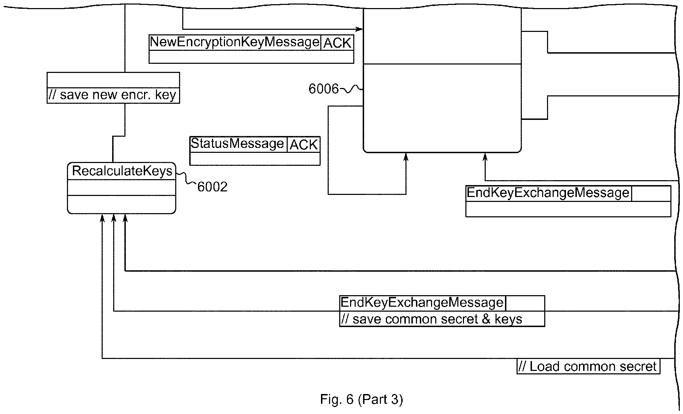

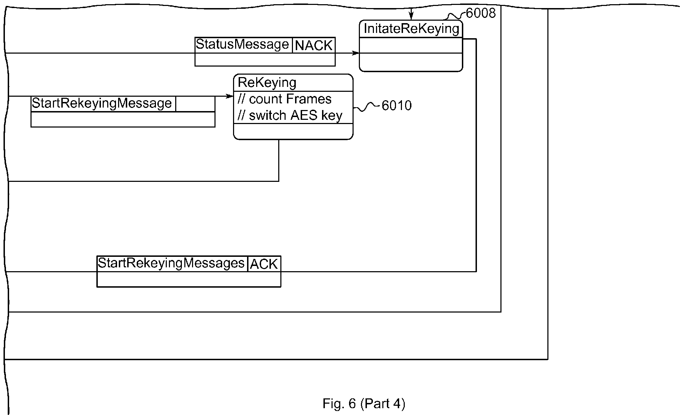

Fig. 5 and Fig. 6 illustrate a block diagram of an embodiment of a protocol specification for the system 350. Initially, the system may generate public and private keys and then reach an initial state 6000. In the initial state 6000, the system may obtain information related to an Open Connection Indication (OCI). If the OCI indicates a working channel 6102, the system may determine whether a key exchange is needed 6104. If a key exchange is needed, the key messages may be exchange in the KeyExchange_running state 6001, e.g. to perform a Diffie-Hellman key exchange. When the initial key exchange is done, both the transmitter apparatus 10 and the receiver apparatus 20 may share the same shared key. This may be used to encrypt the symmetric keys which may be used to encrypt the data plane traffic. It may be additionally used to sign important parts of the message set. The system may then generate new traffic encryption key in state RecalculateKeys 6002. This encryption key and other parameters may be sent to the peer node in state SendPeerData 6004. Upon successful acknowledgment the system may enter the Working state 6006. On system startup the new key may have a ValidKeyTime of 0, so that the rekeying procedure may start immediately.

When entering the InitiateRekeying state 6008 the transmitter apparatus 10 may send a StartRekeyingMessage 5002 to the receiver apparatus 20 and load the new key into the encryption subsystem, which may correspond to the information related to the encryption. This may continue to encrypt the following "RekeyingFrames" frames using the old encryption key and then switch over to the new encryption key, e.g. based on the information related to the key change delay. In the Working state 6006, the transmitter apparatus 10 and/or the receiver apparatus 20 may periodically send a status message to its peer. In case the transmitter apparatus 10 and/or the receiver apparatus 20 receive a negative status message from its peer, the system may transition from the Working state 6006 to the InitiateRekeying state 6008. Optionally, the transmitter apparatus 10 and/or the receiver apparatus 20 may periodically enter the SendPeerData state 6004 to re-send the information related to the encryption key.

When the receiver apparatus 20 receives the StartRekeyingMessage 5002, which may correspond to the information related to the key change mechanism, it may enter the ReKeying state 6010. In this state the receiver apparatus may use the old decryption key, which may be based on the information related to the encryption, for the next "RekeyingFrames", which may be based on the information related to the key change delay, and then switch to the new one which may be already loaded to the decryption subsystem, which may correspond to the information related to the encryption, before. This procedure may enable that a key change is done hitless.

When the service is taken down (e.g. by control plane application or based on the OCI indicator) the system may return to the initial state 6000 and may clear the memory to prevent captured traffic from being decrypted afterwards. A sequence number may prevent replay attacks on the protocol.

In at least one implementation, the Information related to the encryption control information may comprise KeyManagement information 5004. The KeyManagement may comprise a ProtocolType 5006, which may indicate NormalOperation or KeyExchange, and a FrameCounter, which may comprise 7 bit, and which may correspond to the information related to the frame counter. If the ProtocolType 5006 indicates a KeyExchange, the KeyManagement may further comprise a KeyExchangeMessage 5008, which may comprise 31 bytes. The KeyManagement information 5004 may further comprise information related to KeyMessages 5010 comprising information related to a MessageType 5012, which may indicate whether a message comprises information related to a StartKeyExchange, an EndKeyExchange, a StartKeyExchangeMessage, a NewEncryptionKey, a StartRekeying, an EndRekeying or a Status.

If the MessageType 5012 indicates a NewEncryptionKey, the KeyManagement 5004 may further comprise a NewEncryptionKeyMessage 5014, which may comprise a counter, which may correspond to the information related to the key change delay, and reserved bytes. The reserved bytes might be used by the information related to the encryption payload information, e.g. the information related to the encryption key. The information related to the encryption key may be based on an EncryptionKeyStruct 5016, which may comprise a KeyId (e.g. 32 bit), a ValidTime (e.g. 32 bit) and the encryption key (e.g. 32 bytes). The EncryptionKeyStruct 5016 may be authenticated, e.g. using a Keyed-Hash Message Authentication Code with a Secure Hash Algorithm 1 (HMACSHA1).

If the messageType 5012 indicates a StartKeyExchange, the KeyManagement 5004 may further comprise a StartKeyExchangeMessage 5018, comprising an ACK message 5020. The ACK message 5020 may comprise information related to an acknowledgement (ACK) or a negative acknowledgement (NACK).

If the MessageType 5012 indicates an EndKeyExchange, the KeyManagement 5004 may further comprise an EndKeyExchangeMessage 5022, comprising the ACK message 5020.

If the MessageType 5012 indicates a Status, the KeyManagement 5004 may further comprise a StatusMessage 5024, comprising the ACK message 5020, a sequence number (e.g. 32 bit) and a KeyId (e.g. 32 bit).

If the MessageType 5012 indicates an EndRekeying, the KeyManagement 5004 may further comprise an EndRekeyingMessage 5026, comprising the ACK message 5020, and a KeyId (e.g. 32 bit). The EndRekeyingMessage 5026 may be authenticated, e.g. using HMACSHA1.

If the MessageType 5012 indicates a StartRekeying, the KeyManagement 5004 may further comprise a StartRekeyingMessage 5002, comprising the ACK message 5020, RekeyingFragmes (e.g. 32 bit), which may correspond to the information related to the key change delay, and a KeyId (e.g. 32 bit). The StartRekeyingMessage 5002 may be authenticated, e.g. using HMACSHA1.

In another embodiment, the information related to the operator-specific control information may consist of 32 bytes which may be used by an operator. The source of an ODU, e.g. the transmitter apparatus 10, may generate the 32 bytes, which might not be altered between the source and the sink of the ODU, e.g. the receiver apparatus 20 (Non-Intrusive Monitoring (NIM) functionality may be supported).

The Sink of the ODU, e.g. the receiver apparatus 20, may terminate the signal and extract the bytes. To support larger than 32 byte messages a frame counter may be used, e.g. in the information related to the frame counter.

In embodiments, the protocol may cover two aspects: encryption key exchange, and encryption control. Two types of messages may be used:
▪ SyncCryptoParams Messages
▪ Control Messages

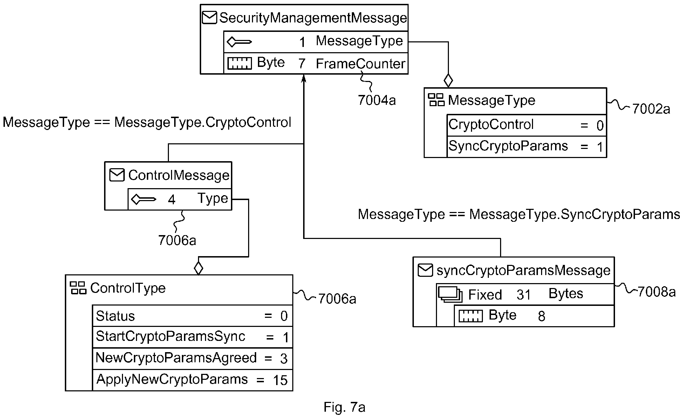

Fig. 7a illustrates an embodiment of an overall message structure in a Unified Modeling Language (UML)-like terminology. In embodiments, the first bit may define the type of the message protocol 7002a. A leading 0 may indicate that the message is of type ControlMessage while a leading 1 may indicate that the message is of type SyncCryptoParams. The subsequent 7 bits of the first byte may be used as frame counter 7004a, which may be used for grouping up to 128 partial messages into one single message, allowing the transport of up to 3968 byte (31*128) long messages. This may be used to implement a key exchange protocol or to exchange certificates, e.g. for the information related to the encryption payload information. In embodiments, the SyncCryptoParams message may be treated as opaque object. The size of the frame counter may depend on chosen security measures. The SyncCryptoParams message 7008a of Fig. 7a may comprise the information related to the encryption payload information. It may comprise 31 bytes. Using the frame counter 7004a, the information related to the encryption payload information may be spread over multiple frames.

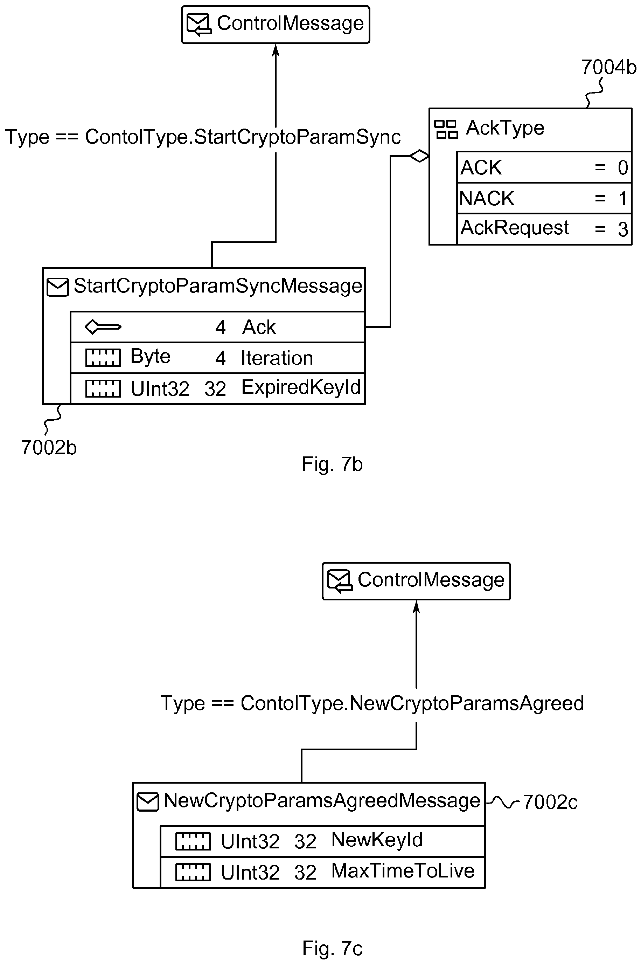

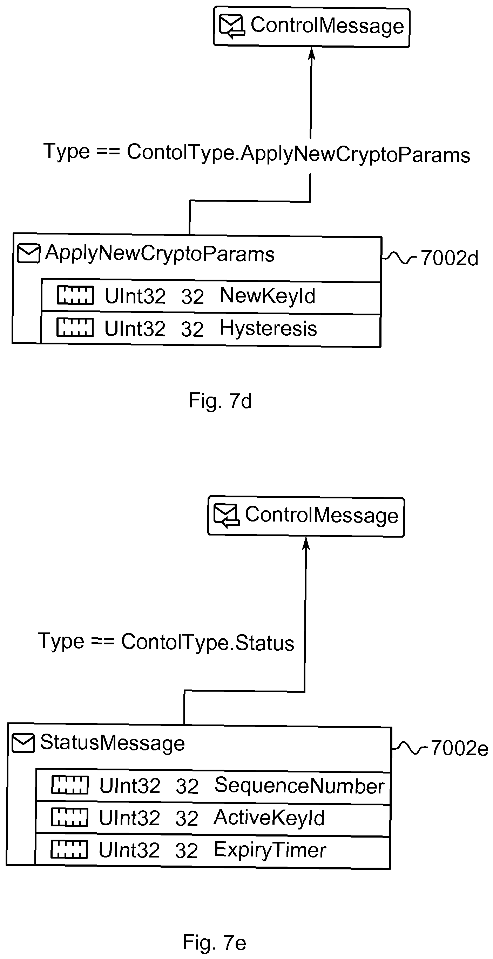

In at least some embodiments, several control messages may be introduced:
▪ A "Start Crypto Parameter Synchronization" message (Fig. 7b)
▪ A "New Crypto Parameter Agreed" message (Fig. 7c)
▪ A "Apply New Crypto Parameter" message (Fig. 7d)
▪ A "Status" message (Fig. 7e)

In embodiments, four bits may be used to indicate the ControlType 7006a. The StartCryptoParamSync message 7002b of Fig. 7b, which may comprise an acknowledgement message 7004b (e.g. 4 bit), an iteration indicator (e.g. 4 bit) and an identifier of an expired encryption key (e.g. 32 bit) may trigger a synchronization of the cryptography parameters (e.g. information related to encryption control information, information related to encryption payload information).

The NewCryptoParamsAgreed message 7002c of Fig. 7c, which may comprise information related to a new encryption key identifier (e.g. 32 bit) and information related to an expiry of the new encryption key, may inform about parameters of a new encryption key. The encryption key may be identified by a key identifier.

The ApplyNewCryptoParams message 7002d of Fig. 7d, which may comprise information related to a new encryption key identifier (e.g. 32bit) and information related to a hysteresis (e.g. 32 bit), which may correspond to the information related to a key change delay, may be sent out when the device, e.g. the control module 14 and/or the control module 24, is instructed to use the new keys. The information related to the hysteresis may define the amount of ODU frames after which the new parameters (encryption key) may be applied. The receiving framer, e.g. the control module 24, may also switch the decryption parameters (key) after this hysteresis (minus the frames needed for detection, which may be constant, for example).

The Status message 7002e of Fig. 7e may be sent periodically. It may comprise information related to a sequence number (e.g. 32 bit), information related current Id of the key which is in use (e.g. 32 bit), and information related to an expiry timer.

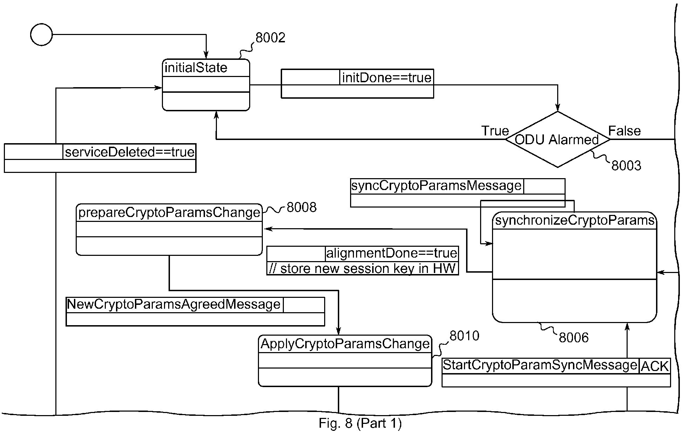

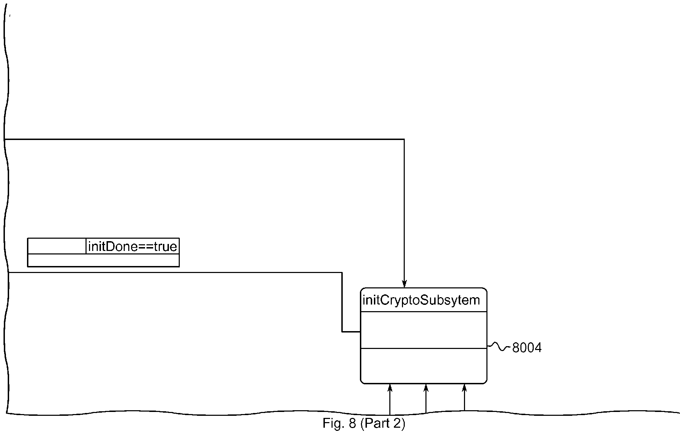

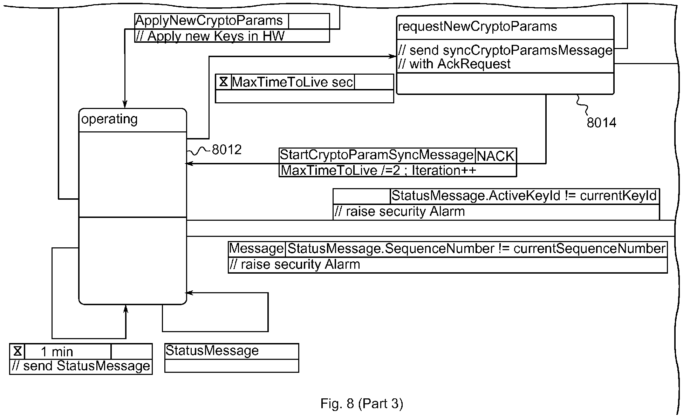

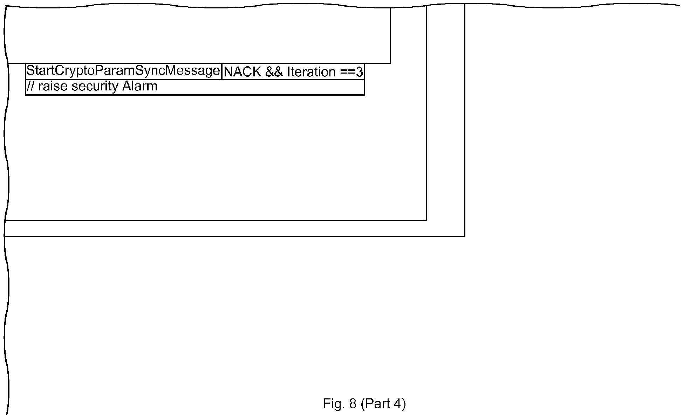

Fig. 8 illustrates an UML State diagram of an embodiment of a protocol for the transmitter apparatus 10 and/or the receiver apparatus 20. Initially, the protocol may reach an initial state 8002. In the initial state 8002, the system may perform an initialization and obtain information related to an alarm state of the ODU, e.g. an Open Connection Indication (OCI). If the alarm state indicates a working channel 8003, a initCryptoSubsystem state 8004 may be reached and the cryptographic subsystem, e.g. the information related to the encryption, may be initialized. Once the initialization is completed, a synchronizeCryptoParams state 8006 may be reached, in which the syncCryptoParamsMessage 7008a may be sent. Once the cryptographic parameters, e.g. the information related to the encryption payload information comprising the information related to the encryption key, are synchronized (e.g. alignmentDone is true) and the new session keys are stored, a prepareCryptoParamsChange 8008 may be reached, and the NewCryptoParamsAgreed message 7002c may be sent. Once the message is sent, an applyCryptoParamsChange state 8010 may be reached, from which the ApplyNewCryptoParams 7002d message may be sent and the new encryption keys may be applied to reach an Operating state 8012. From the operating state, the Status message 7002e may be sent and received. If the optical data transmission service is deleted and/or unavailable, the system may return to the initial state 8002. If the security is compromised, e.g. because the sequence number and/or the identifier for the encryption key do not match between the peers, an alarm may be raised and the initCryptoSubsystem 8004 state may be reached. If the validity of the encryption key expires, a requestNewCryptoParams state 8014 may be reached. From the requestNewCryptoParams state 8014, the StartCyrptoParamSyncMessage 7002b may be sent. If the information related to the acknowledgement 7004b is answered with an acknowledgement (ACK), the synchronizeCryptoParameters state 8006 may be reached. If a negative acknowledgement (NACK) is received, the information related to the expiry of the encryption key may be halved, a NACK counter may be increased, and the operating state 8012 may be reached. If the NACK counter reaches a threshold, e.g. 3, an alarm may be raised and the initCryptoSubsystem state may be reached to re-initialize the cryptographic subsystem.

In at least some embodiments, at least parts of the protocol may be implemented in hardware. For example, the message extraction/insertion of the ODU TTI byte may be processed by Hardware. To allow a frame synchronous switch, the ApplyNewCryptoParams 7002d message may be processed autonomously by the hardware. The value of the Hysteresis field may depend on the framing and encryption device, e.g. the transmitter apparatus 10 and/or the receiver apparatus 20.

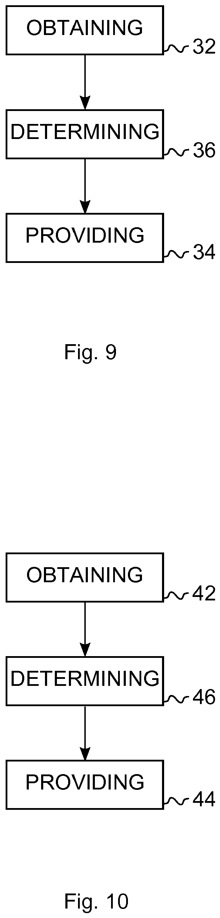

Fig. 9 shows a block diagram of a flow chart of an embodiment of a method suitable for transmitting encrypted output data packets in an optical data transmission network 300. The method comprises obtaining 32 input data packets and providing 34 the encrypted output data packets. The method further comprises determining 36 the encrypted output data packets based on the input data packets and information related to an encryption. The encrypted output data packets comprise information related to control information and information related to payload information. The information related to the control information comprises information related to operator-specific control information. The information related to the operator-specific control information comprises information related to encryption instructions, based on the information related to the encryption.

Fig. 10 shows a block diagram of a flow chart of an embodiment of a method suitable for receiving encrypted input data packets in an optical data transmission network 300. The method comprises obtaining 42 the encrypted input data packets and providing 44 output data packets. The method further comprises determining 46 the output data packets based on the encrypted input data packets and based on information related to an encryption. The encrypted input data packets comprise information related to control information and information related to payload information. The information related to the control information comprises information related to operator-specific control information. The information related to the operator-specific control information comprises information related to encryption instructions.

Some embodiments comprise a digital control circuit installed within the apparatus for performing the method. Such a digital control circuit, e.g. a Digital Signal Processor (DSP), needs to be programmed accordingly. Hence, yet further embodiments also provide a computer program having a program code for performing embodiments of the method, when the computer program is executed on a computer, a digital processor, or a programmable hardware component. A further embodiment is a computer readable storage medium storing instructions which, when executed by a computer, processor, or programmable hardware component, cause the computer to implement one of the methods described herein.

A person of skill in the art would readily recognize that steps of various above-described methods can be performed by programmed computers. Herein, some embodiments are also intended to cover program storage devices, e.g., digital data storage media, which are ma-chine or computer readable and encode machine-executable or computer-executable pro-grams of instructions where said instructions perform some or all of the steps of methods described herein. The program storage devices may be, e.g., digital memories, magnetic storage media such as magnetic disks and magnetic tapes, hard drives, or optically readable digital data storage media. The embodiments are also intended to cover computers programmed to perform said steps of methods described herein or (field) programmable logic arrays ((F)PLAs) or (field) programmable gate arrays ((F)PGAs), programmed to perform said steps of the above-described methods.

The apparatus 10, the apparatus 20, and/or the system 350 may allow operators to create (and offer) "on the fly" encrypted services without having to worry about centralized key management. There might be no need for encryption key provisioning on the involved Network Elements (NEs) or operation of an encryption key server when to using a Diffie-Hellman key exchange algorithm, for example (which may be considered vulnerable to man-in-the-middle attacks if used without additional measures, but may be considered secure in combination with PKI). The protocol may be configured to deal with other encryption key distribution mechanisms (e.g. pre-shared or PKI).

The protocol may ensure that the signal is encrypted end-to-end no matter how many domain (or even operator) boundaries are crossed. Using the Operator specific Trace Identifier bytes of the ODUk Overhead may ensure that the protocol can run end-to-end since the Network Elements in between are required to transport it. The Non-Intrusive Monitoring (NIM) functionality of Network Elements in between might not reduce security since encryption key exchange algorithms may be designed to work over an insecure medium.

The description and drawings merely illustrate the principles of the invention. It will thus be appreciated that those skilled in the art will be able to devise various arrangements that, although not explicitly described or shown herein, embody the principles of the invention and are included within its and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Functional blocks denoted as "means for ..." (performing a certain function) shall be understood as functional blocks comprising circuitry that is adapted for performing or to perform a certain function, respectively. Hence, a "means for s.th." may as well be understood as a "means being adapted or suited for s.th.". A means being adapted for performing a certain function does, hence, not imply that such means necessarily is performing said function (at a given time instant).

The functions of the various elements shown in the Figures, including any functional blocks labeled as "means", "means for controlling", "means for transmitting", "means for receiving", "means for transceiving", "means for processing", "means for encrypting", etc., may be provided through the use of dedicated hardware, such as "a controller", "a transmitter", "a receiver", "a transceiver", "a processor", "an encryptor", etc. as well as hardware capable of executing software in association with appropriate software. Moreover, any entity described herein as "means", may correspond to or be implemented as "one or more modules", "one or more devices", "one or more units", etc. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional or custom, may also be included. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Furthermore, the following claims are hereby incorporated into the Detailed Description, where each claim may stand on its own as a separate embodiment. While each claim may stand on its own as a separate embodiment, it is to be noted that - although a dependent claim may refer in the claims to a specific combination with one or more other claims - other embodiments may also include a combination of the dependent claim with the subject matter of each other dependent claim. Such combinations are proposed herein unless it is stated that a specific combination is not intended. Furthermore, it is intended to include also features of a claim to any other independent claim even if this claim is not directly made dependent to the independent claim.

It is further to be noted that methods disclosed in the specification or in the claims may be implemented by a device having means for performing each of the respective steps of these methods.

## Claims

1. An apparatus (10) suitable for transmitting encrypted output data packets in an optical data transmission network (300), the apparatus (10) comprising
one or more interfaces (12) to obtain input data packets and to provide the encrypted output data packets; and
a control module (14) to determine the encrypted output data packets based on the input data packets and information related to an encryption,
wherein the encrypted output data packets comprise information related to control information and information related to payload information, wherein the information related to the control information comprises information related to operator-specific control information, **characterized in that** the information related to the operator-specific control information comprises information related to encryption instructions based on the information related to the encryption.

2. The apparatus (10) of claim 1, wherein the optical data transmission network corresponds to a G.709 optical data transmission network and/or wherein the information related to the control information corresponds to a G.709 Optical channel Data Unit-header, ODU, and wherein the information related to the operator-specific control information corresponds to operator-specific bytes of a Trail Trace Identifier, TTI, of bytes reserved for Path Monitoring, PM or wherein the information related to the operator-specific control information corresponds to operator-specific bytes of a Trail Trace Identifier, of bytes reserved for Tandem Connection Monitoring, TCM.

3. The apparatus (10) of claim 1, wherein the information related to encryption instructions comprises information related to encryption control information and information related to encryption payload information.

4. The apparatus (10) of claim 3, wherein the control module (14) is configured to provide an encryption key based on the information related to the encryption, and wherein the information related to the encryption payload information comprises information related to the encryption key.

5. The apparatus (10) of claim 3, wherein the information related to the encryption control information comprises information related to a frame counter and wherein the information related to the encryption payload information comprises information related to an encryption key, and wherein the information related to the encryption key extends across at least two subsequent output data packets, and/or wherein the information related to the encryption control information comprises information related to a key change mechanism.

6. The apparatus (10) of claim 5, wherein the control module (14) is configured to determine a new encryption key and information related to a key change delay, and wherein the control module (14) is configured to update the information related to the encryption based on the new encryption key and based on the information related to the key change delay, such that output data packets are determined with continuously encrypted payload information, and wherein the information related to the encryption payload information comprises information related to the new encryption key, and wherein the information related to the key change mechanism comprises information related to the key change delay.

7. An apparatus (20) suitable for receiving encrypted input data packets in an optical data transmission network (300), the apparatus (20) comprising
one or more interfaces (22) to obtain the encrypted input data packets and to provide output data packets; and
a control module (24) to determine the output data packets based on the encrypted input data packets and based on information related to an encryption,
wherein the encrypted input data packets comprise information related to control information and information related to payload information, wherein the information related to the control information comprises information related to operator-specific control information, **characterized in that** the information related to the operator-specific control information comprises information related to encryption instructions.

8. The apparatus (20) of claim 7, wherein the optical data transmission network corresponds to a G.709 optical data transmission network and/or wherein the information related to the control information corresponds to a G.709 Optical channel Data Unit-header, ODU, and wherein the information related to the operator-specific control information corresponds to operator-specific bytes of a Trail Trace Identifier, TTI, of bytes reserved for Path Monitoring, PM or wherein the information related to the operator-specific control information corresponds to operator-specific bytes of a Trail Trace Identifier, of bytes reserved for Tandem Connection Monitoring, TCM.

9. The apparatus (20) of claim 7, wherein the information related to the encryption instructions comprises information related to encryption control information and information related to encryption payload information.

10. The apparatus (20) of claim 9, wherein the information related to the encryption payload information comprises information related to an encryption key, and wherein the control module (24) is configured to determine and/or update the information related to the encryption based on the information related to the encryption key.

11. The apparatus (20) of claim 9, wherein the information related to the encryption control information comprises information related to a key change mechanism and information related to a key change delay, and wherein the information related to the encryption payload information comprises information related to a new encryption key, and wherein the control module (24) is configured to update the information related to the encryption based on the information related to the new encryption key and the information related to the key change delay.

12. A system (350) comprising a transmitter apparatus (10) according to claim 1 and a receiver apparatus (20) according to claim 7, wherein the transmitter apparatus (10) is configured to transmit the encrypted output data packets to the receiver apparatus (20) via at least one network component.

13. A method suitable for transmitting encrypted output data packets in an optical data transmission network (300), the method comprising
obtaining (32) input data packets;
providing (34) the encrypted output data packets; and
determining (36) the encrypted output data packets based on the input data packets and information related to an encryption,
wherein the encrypted output data packets comprise information related to control information and information related to payload information, wherein the information related to the control information comprises information related to operator-specific control information, **characterized in that** the information related to the operator-specific control information comprises information related to encryption instructions based on the information related to the encryption.

14. A method suitable for receiving encrypted input data packets in an optical data transmission network (300), the method comprising
obtaining (42) the encrypted input data packets;
providing (44) output data packets; and
determining (46) the output data packets based on the encrypted input data packets and based on information related to an encryption,
wherein the encrypted input data packets comprise information related to control information and information related to payload information, wherein the information related to the control information comprises information related to operator-specific control information, **characterized in that** the information related to the operator-specific control information comprises information related to encryption instructions.

15. A computer program having a program code for performing at least one of the methods of claims 13 and 14, when the computer program is executed on a computer, a processor, or a programmable hardware component.

## Patentansprüche

1. Vorrichtung (10), geeignet zum Übertragen codierter Ausgangsdatenpakete in einem optischen Datenübertragungsnetzwerk (300), wobei die Vorrichtung (10) umfasst
eine oder mehrere Schnittstellen (12) zum Erhalten von Eingangsdatenpaketen und zum Bereitstellen der codierten Ausgangsdatenpakete; und
ein Steuermodul (14) zum Bestimmen der codierten Ausgangsdatenpakete auf Grundlage der Eingangsdatenpakete und von Information, die mit einer Codierung in Bezug steht,
wobei die codierten Ausgangsdatenpakete Information umfassen, welche in Bezug steht zu Steuerinformation, und Information, die mit Nutzinformation in Bezug steht, wobei die Information, die mit der Steuerinformation in Bezug steht, Information umfasst, die mit operatorspezifischer Steuerinformation in Bezug steht, **dadurch gekennzeichnet, dass** die Information, die mit der operatorspezifischen Steuerinformation in Bezug steht, Information umfasst, welche mit Codieranweisungen in Bezug steht, die auf der Information basieren, die mit der Codierung in Bezug steht.

2. Vorrichtung (10) nach Anspruch 1, wobei das optische Datenübertragungsnetzwerk einem optischen G.709 Datenübertragungsnetzwerk entspricht und/oder wobei die Information, die mit der Steuerinformation in Bezug steht, einem optischen G.709 Kanaldateneinheits-Header, ODU, entspricht, und wobei die Information, welche mit der operatorspezifischen Steuerinformation in Bezug steht, operatorspezifischen Bytes einer Spurverfolgungskennung, TTI, oder von Bytes entspricht, die für die Pfadüberwachung, PM, reserviert sind, oder wobei die Information, die mit der operatorspezifischen Steuerinformation in Bezug steht, operatorspezifischen Bytes einer Spurverfolgungskennung oder Bytes entspricht, die für Tandemverbindungsüberwachung, TCM, reserviert sind.

3. Vorrichtung (10) nach Anspruch 1, wobei die Information, die mit Codieranweisungen in Bezug steht, Information umfasst, welche mit Codiersteuerinformation in Bezug steht, und Information, die mit Codiernutzinformation in Bezug steht.

4. Vorrichtung (10) nach Anspruch 3, wobei das Steuermodul (14) konfiguriert ist zum Bereitstellen eines Codierschlüssels auf Grundlage der Information, die mit der Codierung in Bezug steht, und wobei die Information, die mit der Codiernutzinformation in Bezug steht, Information umfasst, die mit dem Codierschlüssel in Bezug steht.

5. Vorrichtung (10) nach Anspruch 3, wobei die Information, die mit der Codiersteuerinformation in Bezug steht, Information umfasst, welche mit einem Bildzähler in Bezug steht, und wobei die Information, die mit der Codiernutzinformation in Bezug steht, Information umfasst, welche mit einem Codierschlüssel in Bezug steht, und wobei die Information, die mit dem Codierschlüssel in Bezug steht, sich über mindestens zwei nachfolgende Ausgangsdatenpakete erstreckt, und/oder wobei die Information, die mit der Codiersteuerinformation in Bezug steht, Information umfasst, welche mit einem Schlüsseländerungsmechanismus in Bezug steht.

6. Vorrichtung (10) nach Anspruch 5, wobei das Steuermodul (14) konfiguriert ist zum Bestimmen eines neuen Codierschlüssels und von Information, die in Bezug steht zu einem Schlüsselaustauschverzug, und wobei das Steuermodul (14) konfiguriert ist zum Aktualisieren der Information, die in Bezug steht mit der Codierung, auf Grundlage des neuen Codierschlüssels und auf Grundlage der Information, welche in Bezug steht mit dem Schlüsselaustauschverzug, sodass die Ausgangsdatenpakete mit kontinuierlich codierter Nutzinformation bestimmt werden, und wobei die Information, die mit der Codiernutzinformation in Bezug steht, Information umfasst, welche mit dem neuen Codierschlüssel in Bezug steht, und wobei die Information, die mit dem Schlüsselaustauschmechanismus in Bezug steht, Information umfasst, welche mit dem Schlüsselaustauschverzug in Bezug steht.

7. Vorrichtung (20), geeignet zum Empfangen codierter Eingangsdatenpakete in einem optischen Datenübertragungsnetzwerk (300), wobei die Vorrichtung (20) umfasst
eine oder mehrere Schnittstellen (22) zum Erhalten der codierten Eingangsdatenpaketen und zum Bereitstellen von Ausgangsdatenpaketen; und
ein Steuermodul (24) zum Bestimmen der Ausgangsdatenpakete auf Grundlage der codierten Eingangsdatenpakete und auf Grundlage von Information, die mit einer Codierung in Bezug steht,
wobei die codierten Eingangsdatenpakete Information umfassen, welche in Bezug steht zu Steuerinformation, und Information, die mit Nutzinformation in Bezug steht, wobei die Information, die mit der Steuerinformation in Bezug steht, Information umfasst, die mit operatorspezifischer Steuerinformation in Bezug steht, **dadurch gekennzeichnet, dass** die Information, die mit der operatorspezifischen Steuerinformation in Bezug steht, Information umfasst, welche mit Codieranweisungen in Bezug steht.

8. Vorrichtung (20) nach Anspruch 7, wobei das optische Datenübertragungsnetzwerk einem optischen G.709 Datenübertragungsnetzwerk entspricht und/oder wobei die Information, die mit der Steuerinformation in Bezug steht, einem optischen G.709 Kanaldateneinheits-Header, ODU, entspricht, und wobei die Information, welche mit der operatorspezifischen Steuerinformation in Bezug steht, operatorspezifischen Bytes einer Spurverfolgungskennung, TTI, oder von Bytes entspricht, die für die Pfadüberwachung, PM, reserviert sind, oder wobei die Information, die mit der operatorspezifischen Steuerinformation in Bezug steht, operatorspezifischen Bytes einer Spurverfolgungskennung oder Bytes entspricht, die für Tandemverbindungsüberwachung, TCM, reserviert sind.

9. Vorrichtung (20) nach Anspruch 7, wobei die Information, die mit den Codieranweisungen in Bezug steht, Information umfasst, welche mit Codiersteuerinformation in Bezug steht, und Information, die mit Codiernutzinformation in Bezug steht.

10. Vorrichtung (20) nach Anspruch 9, wobei die Information, die mit der Codiernutzinformation in Bezug steht, Information umfasst, welche mit einem Codierschlüssel in Bezug steht, und wobei das Steuermodul (24) konfiguriert ist zum Bestimmen und/oder Aktualisieren der Information, die in Bezug steht mit der Codierung, auf Grundlage der Information, die mit dem Codierschlüssel in Bezug steht.

11. Vorrichtung (20) nach Anspruch 9, wobei die Information, die mit der Codiersteuerinformation in Bezug steht, Information umfasst, welche mit einem Schlüsselaustauschmechanismus in Bezug steht, und Information, die mit einem Schlüsselaustauschverzug in Bezug steht, und wobei die Information, welche mit der Codiernutzinformation in Bezug steht, Information umfasst, die mit einem neuen Codierschlüssel in Bezug steht, und wobei das Steuermodul (24) konfiguriert ist zum Aktualisieren der Information, die in Bezug steht mit der Codierung, auf Grundlage der Information, die mit dem neuen Codierschlüssel in Bezug steht, und der Information, welche mit dem Schlüsselaustauschverzug in Bezug steht.

12. System (350), umfassend eine Sendevorrichtung (10) nach Anspruch 1 und eine Empfängervorrichtung (20) nach Anspruch 7, wobei die Sendevorrichtung (10) konfiguriert ist zum Übertragen der codierten Ausgangsdatenpakete auf die Empfängervorrichtung (20) über mindestens eine Netzwerkkomponente.

13. Verfahren, geeignet zum Übertragen codierter Ausgangsdatenpakete in einem optischen Datenübertragungsnetzwerk (300), wobei das Verfahren umfasst
Erhalten (32) von Eingangsdatenpaketen;
Bereitstellen (34) der codierten Ausgangsdatenpakete; und
Bestimmen (36) der codierten Ausgangsdatenpakete auf Grundlage der Eingangsdatenpakete und von Information, die mit einer Codierung in Bezug steht, wobei die codierten Ausgangsdatenpakete Information umfassen, welche in Bezug steht zu Steuerinformation, und Information, die mit Nutzinformation in Bezug steht, wobei die Information, die mit der Steuerinformation in Bezug steht, Information umfasst, die mit operatorspezifischer Steuerinformation in Bezug steht, **dadurch gekennzeichnet, dass** die Information, die mit der operatorspezifischen Steuerinformation in Bezug steht, Information umfasst, welche mit Codieranweisungen in Bezug steht, die auf der Information basieren, die mit der Codierung in Bezug steht.

14. Verfahren, geeignet zum Empfangen codierter Eingangsdatenpakete in einem optischen Datenübertragungsnetzwerk (300), wobei das Verfahren umfasst
Erhalten (42) der codierten Eingangsdatenpakete;
Bereitstellen (44) von Ausgangsdatenpaketen; und
Bestimmen (46) der Ausgangsdatenpakete auf Grundlage der codierten Eingangsdatenpakete und auf Grundlage von Information, die mit einer Codierung in Bezug steht,
wobei die codierten Eingangsdatenpakete Information umfassen, welche in Bezug steht zu Steuerinformation, und Information, die mit Nutzinformation in Bezug steht, wobei die Information, die mit der Steuerinformation in Bezug steht, Information umfasst, die mit operatorspezifischer Steuerinformation in Bezug steht, **dadurch gekennzeichnet, dass** die Information, die mit der operatorspezifischen Steuerinformation in Bezug steht, Information umfasst, welche mit Codieranweisungen in Bezug steht.

15. Computerprogramm mit einem Programmcode zum Durchführen mindestens eines der Verfahren nach den Ansprüche 13 und 14, wenn das Computerprogramm auf einem Computer, Prozessor oder auf programmierbarer Hardware ausgeführt wird.

## Revendications

1. Appareil (10) permettant de transmettre des paquets de données de sortie cryptés dans un réseau de transmission de données optiques (300), l'appareil (10) comprenant
une ou plusieurs interfaces (12) pour obtenir des paquets de données d'entrée et pour fournir les paquets de données de sortie cryptés ; et
un module de commande (14) pour déterminer les paquets de données de sortie cryptés sur la base des paquets de données d'entrée et d'informations relatives à un cryptage, dans lequel les paquets de données de sortie cryptés comprennent des informations relatives à des informations de commande et à des informations relatives à des informations de charge utile, dans lequel les informations relatives aux informations de commande comprennent des informations relatives à des informations de commande propres à l'opérateur, **caractérisé en ce que** les informations relatives aux informations de commande propres à l'opérateur comprennent des informations relatives à des instructions de cryptage sur la base des informations relatives au cryptage.

2. Appareil (10) selon la revendication 1, dans lequel le réseau de transmission de données optiques correspond à un réseau de transmission de données optiques G.709 et/ou dans lequel les informations relatives aux informations de commande correspondent à un en-tête d'unité de données de canal optique, ODU, G.709 et dans lequel les informations relatives aux informations de commande propres à l'opérateur correspondent à des octets propres à l'opérateur d'un identifiant de trace de chemin, TTI, d'octets réservés à la surveillance des voies, PM ou dans lequel les informations relatives aux informations de commande propres à l'opérateur correspondent à des octets propres à l'opérateur d'un identifiant de trace de chemin, d'octets réservés à la surveillance de connexion en tandem, TCM.

3. Appareil (10) selon la revendication 1, dans lequel les informations relatives à des instructions de cryptage comprennent des informations relatives à des informations de commande de cryptage et des informations relatives à des informations de charge utile de cryptage.

4. Appareil (10) selon la revendication 3, dans lequel le module de commande (14) est configuré pour fournir une clé de cryptage sur la base des informations relatives au cryptage, et dans lequel les informations relatives aux informations de charge utile de cryptage comprennent des informations relatives à la clé de cryptage.

5. Appareil (10) selon la revendication 3, dans lequel les informations relatives aux informations de commande de cryptage comprennent des informations relatives à un compteur d'images et dans lequel les informations relatives aux informations de charge utile de cryptage comprennent des informations relatives à une clé de cryptage, et dans lequel les informations relatives à la clé de cryptage s'étendent sur au moins deux paquets de données de sortie ultérieures, et/ou dans lequel les informations relatives aux informations de commande de cryptage comprennent des informations relatives à un mécanisme de changement de clé.

6. Appareil (10) selon la revendication 5, dans lequel le module de commande (14) est configuré pour déterminer une nouvelle clé de cryptage et des informations relatives à un délai de changement de clé, et dans lequel le module de commande (14) est configuré pour mettre à jour les informations relatives au cryptage sur la base de la nouvelle clé de cryptage et sur la base des informations relatives au délai de changement de clé, de sorte que des paquets de données de sortie soient déterminés avec des informations de charge utile cryptées en continu, et dans lequel les informations relatives aux informations de charge utile de cryptage comprennent des informations relatives à la nouvelle clé de cryptage, et dans lequel les informations relatives au mécanisme de changement de clé comprennent des informations relatives au délai de changement de clé.

7. Appareil (20) permettant de recevoir des paquets de données d'entrée cryptés dans un réseau de transmission de données optiques (300), l'appareil (20) comprenant une ou plusieurs interfaces (22) pour obtenir les paquets de données d'entrée cryptés et pour fournir des paquets de données de sortie ; et
un module de commande (24) pour déterminer les paquets de données de sortie sur la base des paquets de données d'entrée cryptés et sur la base d'informations relatives à un cryptage,
dans lequel les paquets de données d'entrée cryptés comprennent des informations relatives à des informations de commande et des informations relatives à des informations de charge utile, dans lequel les informations relatives aux informations de commande comprennent des informations relatives à des informations de commande propres à l'opérateur, **caractérisé en ce que** les informations relatives aux informations de commande propres à l'opérateur comprennent des informations relatives à des instructions de cryptage.

8. Appareil (20) selon la revendication 7, dans lequel le réseau de transmission de données optiques correspond à un réseau de transmission de données optiques G.709 et/ou dans lequel les informations relatives aux informations de commande correspondent à un en-tête d'unité de données de canal optique, ODU, G.709 et dans lequel les informations relatives aux informations de commande propres à l'opérateur correspondent à des octets propres à l'opérateur d'un identifiant de trace de chemin, TTI, d'octets réservés à la surveillance des voies, PM ou dans lequel les informations relatives aux informations de commande propres à l'opérateur correspondent à des octets propres à l'opérateur d'un identifiant de trace de chemin, d'octets réservés à la surveillance de connexion en tandem, TCM.

9. Appareil (20) selon la revendication 7, dans lequel les informations relatives aux instructions de cryptage comprennent des informations relatives à des informations de commande de cryptage et des informations relatives à des informations de charge utile de cryptage.

10. Appareil (20) selon la revendication 9, dans lequel les informations relatives aux informations de charge utile de cryptage comprennent des informations relatives à une clé de cryptage, et dans lequel le module de commande (24) est configuré pour déterminer et/ou mettre à jour les informations relatives au cryptage sur la base des informations relatives à la clé de cryptage.

11. Appareil (20) selon la revendication 9, dans lequel les informations relatives aux informations de commande de cryptage comprennent des informations relatives à un mécanisme de changement de clé et des informations relatives à un délai de changement de clé, et dans lequel les informations relatives aux informations de charge utile de cryptage comprennent des informations relatives à une nouvelle clé de cryptage, et dans lequel le module de commande (24) est configuré pour mettre à jour les informations relatives au cryptage sur la base des informations relatives à la nouvelle clé de cryptage et des informations relatives au délai de changement de clé.

12. Système (350) comprenant un appareil émetteur (10) selon la revendication 1 et un appareil récepteur (20) selon la revendication 7, dans lequel l'appareil émetteur (10) est configuré pour transmettre les paquets de données de sortie cryptés à l'appareil récepteur (20) par l'intermédiaire d'au moins un composant de réseau.

13. Procédé permettant de transmettre des paquets de données de sortie cryptés dans un réseau de transmission de données optiques (300), le procédé comprenant l'obtention (32) de paquets de données d'entrée ;
la fourniture (34) des paquets de données de sortie cryptés ; et
la détermination (36) des paquets de données de sortie cryptés sur la base des paquets de données d'entrée et d'informations relatives à un cryptage,
dans lequel les paquets de données de sortie cryptés comprennent des informations relatives à des informations de commande et des informations relatives à des informations de charge utile, dans lequel les informations relatives aux informations de commande comprennent des informations relatives à des informations de commande propres à l'opérateur, **caractérisé en ce que** les informations relatives aux informations de commande propres à l'opérateur comprennent des informations relatives à des instructions de cryptage sur la base des informations relatives au cryptage.

14. Procédé permettant de recevoir des paquets de données d'entrée cryptés dans un réseau de transmission de données optiques (300), le procédé comprenant
l'obtention (42) des paquets de données d'entrée cryptés ;
la fourniture (44) de paquets de données de sortie ; et
la détermination (46) des paquets de données de sortie sur la base des paquets de données d'entrée cryptés et sur la base d'informations relatives à un cryptage, dans lequel les paquets de données d'entrée cryptés comprennent des informations relatives à des informations de commande et des informations relatives à des informations de charge utile, dans lequel les informations relatives aux informations de commande comprennent des informations relatives à des informations de commande propres à l'opérateur, **caractérisé en ce que** les informations relatives aux informations de commande propres à l'opérateur comprennent des informations relatives à des instructions de cryptage.

15. Programme informatique possédant un code de programme pour exécuter au moins un des procédés selon les revendications 13 et 14, lorsque le programme informatique est exécuté sur un ordinateur, un processeur ou un composant matériel programmable.
